Europäisches Patentamt

European Patent Office

Office européen des brevets

(11) Publication number: **0 273 051 B1**

# EUROPEAN PATENT SPECIFICATION

(45) Date of publication of patent specification: **18.05.94**  (51) Int. Cl.5: **G06F 15/16**

(21) Application number: **87901649.1**

(22) Date of filing: **23.02.87**

(86) International application number:
**PCT/JP87/00117**

(87) International publication number:
**WO 87/05419 (11.09.87 87/20)**

(54) **PARALLEL PROCESSING COMPUTER.**

(30) Priority: **26.02.86 JP 39233/86**

(43) Date of publication of application:
**06.07.88 Bulletin  88/27**

(45) Publication of the grant of the patent:
**18.05.94 Bulletin  94/20**

(84) Designated Contracting States:
**DE GB**

(56) References cited:
**JP-A- 5 168 749**
**JP-A- 5 916 071**
**JP-A-58 146 952**
**US-A- 3 544 973**

**PROSPECTS FOR SIMULATION AND SIMULA-
TORS OF DYNAMIC SYSTEMS, Baltimore,
26th-27th September 1966, pages 229-249,
Macmillan and Co., Ltd, New York, US; W.C.
BORCK et al.: "The design of a variable
structure parallel network computer"**

(73) Proprietor: **HITACHI, LTD.**
**6, Kanda Surugadai 4-chome**
**Chiyoda-ku, Tokyo 101(JP)**

(72) Inventor: **TAKAHASHI, Fumio**
**c/o Energy Research Laboratory of Hitachi,
Ltd.**
**Ibaraki 316(JP)**
Inventor: **NAGAOKA, Yukio**
**1429-11, Suwama**
**Toukai-mura**
**Naka-guun**
**Ibaraki 319-11(JP)**
Inventor: **HARADA, Iwao**
**2607-8, Motoyoshida-cho**
**Mito-shi**
**Ibaraki 310(JP)**
Inventor: **NISHIHARA, Yoshihiro Hitachi Ltd.**
**1168-banchi, Moriyama-cho**
**Hitachi-shi Ibaraki 316(JP)**

Rank Xerox (UK) Business Services
(3.10/3.09/3.3.3)

COMPUTER, vol. 17, no. 3, March 1984, pages 62-74, IEEE, New York, US; C. NORRIE: "Supercomputers for superproblems: An architectural introduction"

(74) Representative: **Patentanwälte Beetz - Timpe - Siegfried Schmitt-Fumian - Mayr Steinsdorfstrasse 10 D-80538 München (DE)**

## Description

[Field of Industrial Application]

The present invention relates to a parallel processing computer, and particularly to a parallel processing computer of the MIMD (multiple instruction multiple data) type that is suited for finding numerical solutions of partial differential equations in the hydrodynamics and the like relying upon the concurrent processing.

[Prior Art]

There has been announced a computer which concurrently performs the processing using a plurality of processing units. A parallel processing computer that is adapted to solving partial differential equations has been proposed in ACM Transactions on Computer Systems, Vol. 1, No. 3, August, 1983, pp. 195-221. This computer is of the MIMD type in which the processing units are connected to a one-dimensional grid, so that the individual processing units will have their own programs to cope with different processings such as processings of boundary conditions.

However, the MIMD type parallel processing computer has a defect in that redundancy is involved since the individual processing units have a common program for common processing resulting in an increase in the memory capacity. A solution to this problem has been described in Japanese Patent Laid-Open No. 146952/1983. In this computer, programs of each of the processing units are stored in a control unit which controls the processing units, and only a portion of the programs is distributed from the control unit to the processing units as the processing units execute the programs, in order to reduce the redundancy in storing the programs and to reduce the memory capacity. Further, a unit to distribute the loop processing is introduced to reduce the number of times of distribution and to reduce the time. This is effective for solving problems in which the loop has small amounts of calculation and large number of repetitions.

[Problem to be Solved by the Invention]

According to the above-mentioned Japanese Patent Laid-Open No. 146952/1983, no consideration has been given to the cases where there are calculations in the loop in amounts greater than the program memory capacity of the processing units. Further, when there are a large number of loops having a small number of repetitions, the distribution must be effected frequently requiring increased periods of time for the distribution.

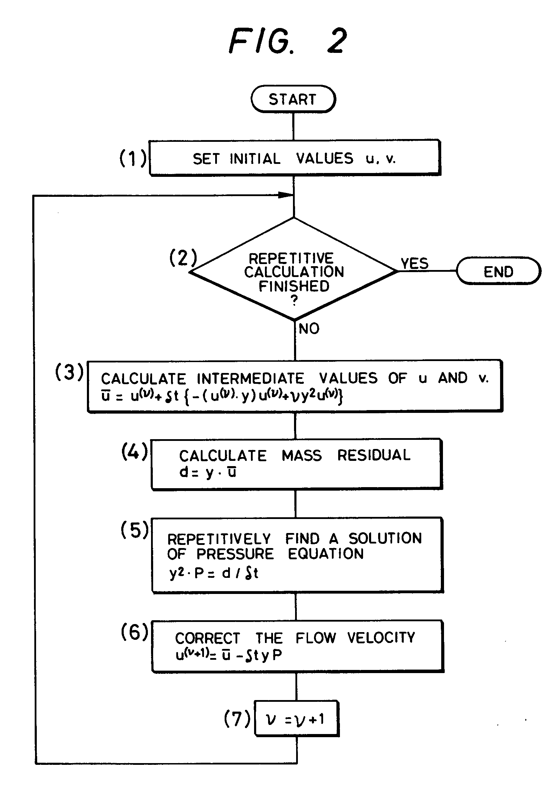

In the numerical analysis of fluid, there are a large number of loops that contain large amounts of calculations. Fig. 2 is a flow chart of a two-dimensional viscous flow analysis as an example of numerical analysis of fluid.

(1) Set initial values v $(^{\circ})$, v $(^{\circ})$ of flow velocities u, v at each of the grid points.
(2) Determine the completion.
(3) Calculate intermediate values $\bar{u}$, $\bar{v}$ of u and v at a time t + $\delta$t at each of the grid points.
(4) Calculate mass residual d at each of the grid points.
(5) Repetitively find solutions of pressure p at each of the grid points.
(6) Calculate to correct values u $(^{v+1})$, v $(^{v+1})$ of u and v at the time t + $\delta$t.

The above steps (1), (3), (4) and (6) are double loops for calculating the two-dimensional grid points, and the step (5) is a triple loop to which the loop for repetitively finding the solution is added. The steps (2) to (6) are included in a loop that renews the time. In a parallel processing computer connected in the form of a grid, on the other hand, the parallel processing is carried out by having a processing unit share a partial region of space. The time for calculation can be shortened by increasing the number of processing units to reduce the number of lattice points shared by each operation unit. That is, in a parallel processing computer having a large number of processing units, the number of repetition decreases in the loops of the steps (2) to (6). Because of the aforementioned reasons, the method of Japanese Patent Laid-Open No. 146952/1983 is not suited for parallel processing the numerical analysis of fluid.

Other large scale computers have been described in Computer, vol. 17 (1984) 62. This article gave a survey of the development of computers up to 1984 and mentioned explicitly array processors and vector processors. As an example for vector computer a block diagram of a vector-processing section was given. Yet, these computers are of the SIMD type. As a way to create a MIMD type computer it is proposed to link together a number of SIMD processors. In this simple architecture it is not taken into account that the instructions can be divided into common instructions and individual instructions and that by this memory space can be saved.

A variable structure computer was proposed in US-A-3 544 973 having a central control and a plurality of segments with processing elements and with supply circuits for the processing elements. These segments are provided simultaneously with identical instructions by the central control in a first step. In a second state of operation the segments were independently from each other and from the central control. Nevertheless, each of the segments must be provided with a memory for storing instructions before executing them, if precedent instructions still have to be completed. In a MIMD-computer this design would require large memory space associated to each segment since as well common and individual instructions had to be stored in the segment memory.

The object of the present invention is to provide a MIMD-type parallel processing computer that is adapted to parallel processing an algorithm that successively executes a plurality of loop processings with a small memory capacity, like the above-mentioned example of the numerical analysis of fluid.

[Means for Solving the Problems]

The present invention was accomplished by giving attention to the fact that the memory capacity can be reduced irrespective of the number of loops, the number of repetitions or the amount of calculation, if an instruction train (hereinafter referred to as common instructions) of a portion of fundamental calculations that form a common processing among the individual processing units, is separated from an instruction train (hereinafter referred to as individual instructions) that describes a portion such as setting the boundary values that form individual processings, and if each instruction is broadcasted to the processing units as far as the common instructions are concerned, in parallel processing the numerical analysis of fluid in a MIMD-type parallel processing comptuer that has programs in each of the processing units.

The processing device in the processing unit has a program counter that is based on the control method of the Neumann type and that indicates an address where the instruction is stored. In this case, the memory bank for the common instructions is separated from the memory banks for the individual instructions. The individual instructions are stored in the memory in the processing unit. As for the common instructions, use is made of FIFO (first in first out memory) as an instruction queue, and output of FIFO is corresponded to address space of common instruction. As for the common instruction, therefore, the instruction is broadcasted to meet the execution conditions of the processing units, so that the memory capacity can be reduced for the common instructions.

When the functions are shared by the control unit in order to broadcast the common instruction to meet the execution conditions of the processing units, the control unit must monitor the execution conditions of the processing units such as counting of the number of repetitions of the loop requiring an extended period of time. The inventors have arrived at the present invention by giving attention to the fact that the execution conditions of the processing units need not be monitored by the control unit if the plurality of processing units are divided into a master processing unit MP and a plurality of slave processing units SP, if part of the concurrent processing is shared, and if the common instruction is broadcasted to the slave processing units at the time when the processing device of the master processing unit receives the common instruction.

[Action]

The master processing unit and the slave processing units share part of the processing, the master processing unit storing the common instructions and individual instructions, and the slave processing units storing the individual instructions. The processing device in the master processing unit receives a common instruction from an address taught by a program counter prior to executing the common instruction, broadcasts the thus received instruction to the slave processing units, and stores the instruction in the instruction queue. A processing device in a slave processing unit receives the common instruction from the instruction queue and executes it. Therefore, the individual processing units need not store the common instructions.

[Brief Description of Drawings]

Fig. 1 is a diagram illustrating the structure of a parallel processing computer that is one-dimensionally arranged according to the present invention;

Fig. 2 is a flow chart illustrating the numerical analysis of two-dimensional viscous flow;

Fig. 3 is a diagram illustrating the structure of a parallel processing computer which is two-dimensionally arranged according to the present invention;

Fig. 4 is a diagram illustrating the structure of a processing unit of Fig. 1;

Fig. 5 is a memory map in the processing unit of Fig. 4;

Fig. 6 is a circuit diagram of the processing unit of Fig. 4;

Fig. 7 is a timing chart of the processing deivce of Fig. 4;

Fig. 8 is a diagram illustrating the order of executing the instructions by the processing device of Fig. 4;

Fig. 9 is a flow chart for concurrently calculating the pressure in the two-dimensional viscous flow analysis of Fig. 2; and

Fig. 10 is a diagram illustrating the structure of a parallel processing comptuer according to an embodiment of the present invention.

[Embodiment]

An embodiment of the present invention will now be explained in conjunction with the drawings.

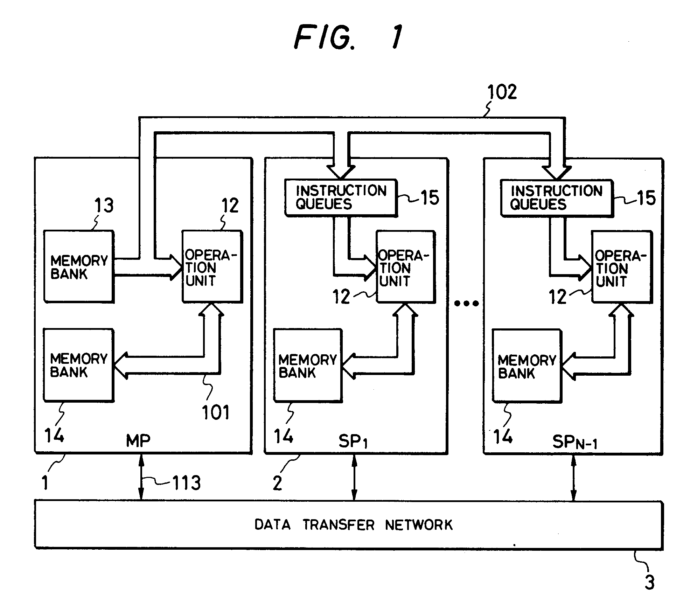

Fig. 1 is a diagram illustrating the structure of a parallel processing comptuer according to the present invention, wherein a plurality of processing units are connected in a one-dimensional manner. In Fig. 1, reference numeral 1 denotes a master processing unit (MP), 2 denotes slave processing units (SP), 3 denotes a data transfer network, 12 denotes processing devices, 13 denotes a memory bank, 14 denotes memory banks, and 15 denotes instruction queues consisting of FIFO. The master processing unit 1 is comprised of the processing device 12, the memory bank 13 and the memory bank 14. The slave processing unit 2 is comprised of the processing device 12, the memory bank 14 and the instruction queue 15.

The master processing unit 1 and the slave processing units 2 are connected together through a one-way instruction broadcast bus 102. Further, the master processing unit 1 and the slave processing units 2 are connected together by data signals 113 transmitted over a data transfer network 3.

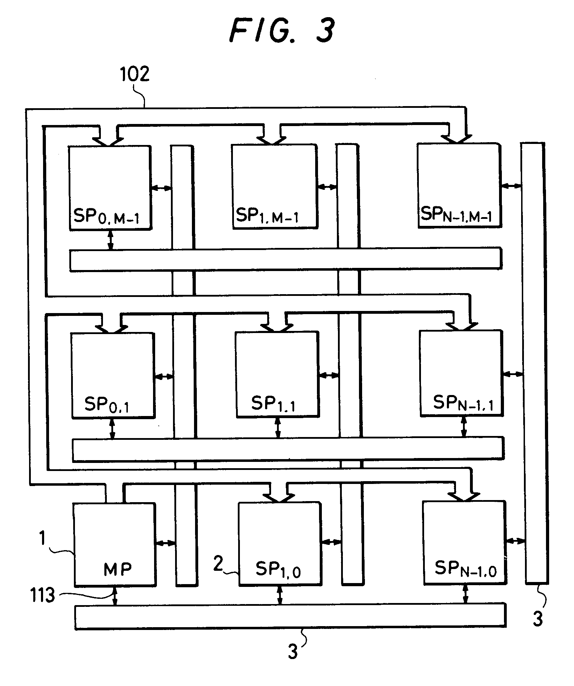

Fig. 3 shows an example in which M x N processing units are arranged in the form of a two-dimensional grid, each of the rows and each of the columns being connected to the data transfer network 3. The instruction broadcast bus 102 is connected from the master processing unit 1 to M x N - 1 slave processing units 2.

Even in an embodiment in which the processing units are two-dimensionally arranged, structures of the master processing unit 1 and slave processing units 2 are the same as those of the one-dimensional arrangement.

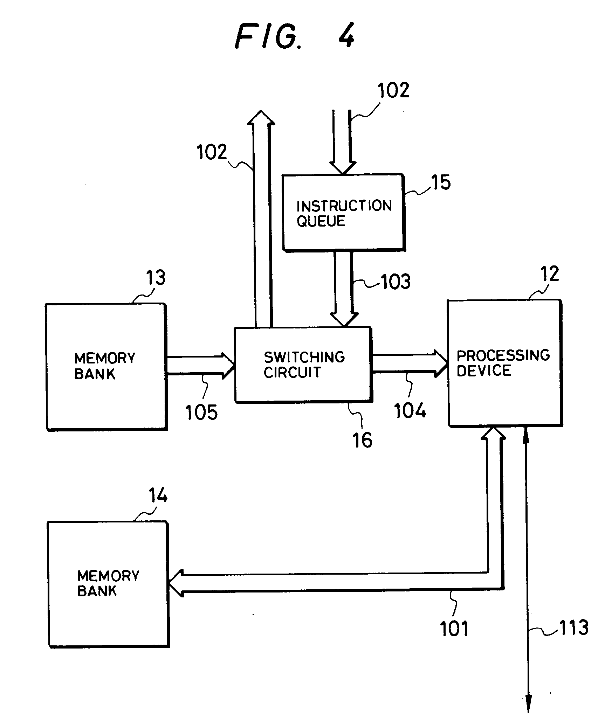

Fig. 4 is a diagram showing the structure of a processing unit. The master processing unit 1 and the slave processing units 2 much share common hardware. Namely, Fig. 4 shows an embodiment in which the master processing unit 1 can be changed into the slave processing unit 2 by switching means.

The processing unit is comprised of the processing device 12, the memory bank 13, the memory bank 14, the instruction queue 15 and a switching circuit 16. The processing device 12 and the memory bank 14 are connected by an address data signal 101, the operation device 12 and the switching circuit 16 are connected by an address data signal 104, and the switching circuit 16 and the memory bank 13 are connected by an address data signal 105. The instruction queue 15 and the switching circuit 16 are connected through a data signal line 103. Outside the processing unit, the instruction broadcast bus 102 is produced from the switching circuit 16, and is input to the instruction queue 15.

The switching circuit 16 works as the master processing unit when it selects an address data line 105 and the instruction broadcast bus 102 and when it mounts the memory bank 13. The switching circuit 16 works as the slave processing unit when it selects the data line 103.

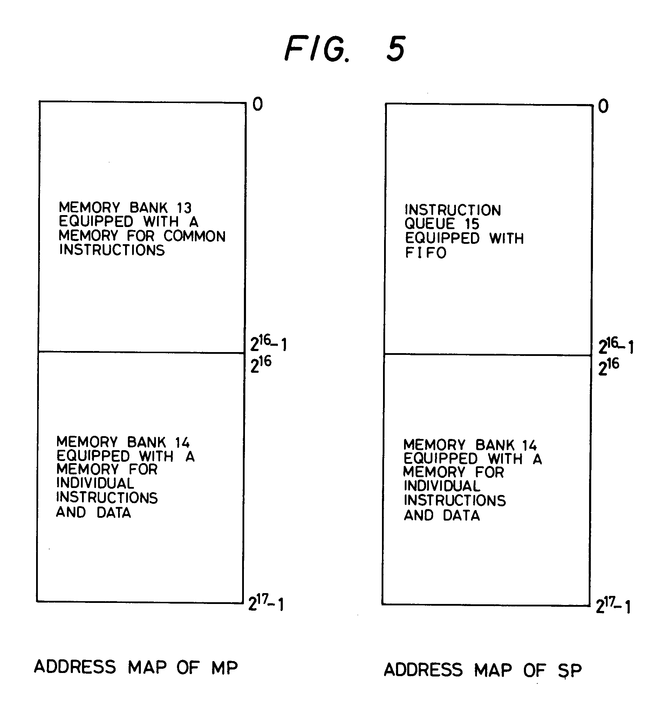

Fig. 5 illustrates address maps of the master processing unit 1 and of the slave processing unit 2, the addresses 0 to $2^{16}$-1 being assigned to the memory bank 13 and the addresses $2^{16}$ - $2^{17}$-1 being assigned to the memory bank 14. FIFO is used for the instruction queue 15 of the slave processing unit 2 to assign the output port of FIFO to the addresses 0 to $2^{16}$-1 of the processing device 12. The processing device 12 of the Nuemann-type is used, in which the instruction train is stored onto the memory, and the instruction is taken out from the memory when the instruction is to be executed. Generally, the processing device of the Neumann type has a program counter, and wherein the instruction is taken out from an address indicated by the program counter. The value of the program counter is solely determined by the history of execution of the instruction train. Therefore, FIFO is used as the instruction queue 15 of the slave processing unit 2, and common instructions received by the processing device 12 of the master processing unit 1 are successively written onto the instruction queue 15. In the processing device 12 of the slave processing unit 2, the program counter indicates the address of common instruction. By taking the instruction from the instruction queue 15, the slave processing unit 2 executes the common instruction following the master processing unit 1.

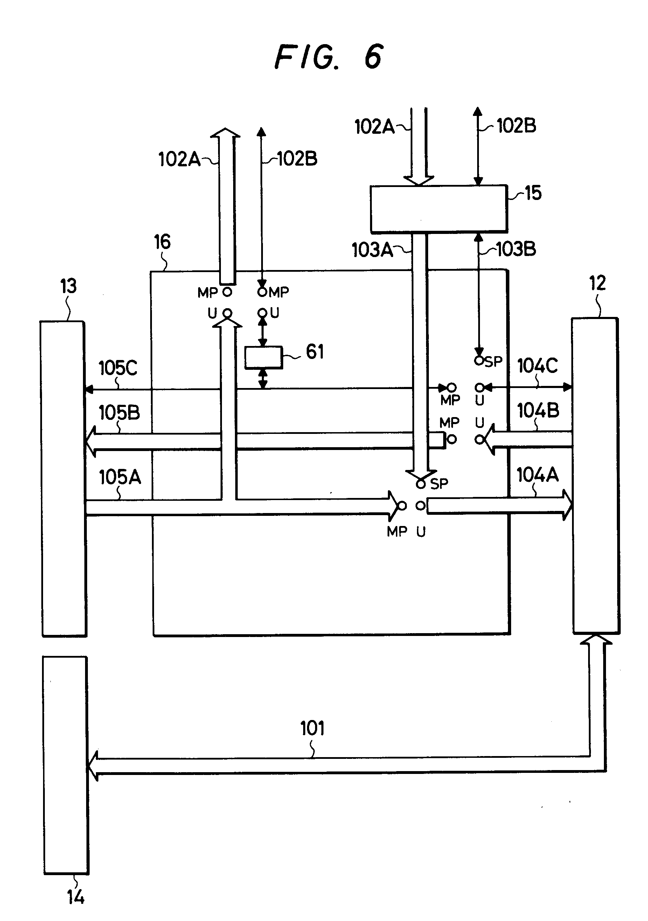

Fig. 6 is a circuit diagram of the processing unit, wherein reference numeral 61 denotes a delay circuit, 102A denotes a data signal, 102B denotes a write control signal (instruction broadcast bus 102), 103A denotes a data signal, 103B denotes a read control signal (data signal line 103), 104A denotes a data signal, 104B denotes an address signal, 104C denotes a read control signal (address data signal 104), 105A denotes a data signal, 105B denotes an address signal, and 105C denotes a read control signal (address signal 105). The switching circuit 16 contains a switch which selects the master processing unit 1 or the slave processing unit 2. When a contact U and a contact MP are connected together, the master processing unit 1 is selected and when the contact U and a contact SP are connected together, the slave processing unit 2 is selected.

Operation of the master processing unit 1 will now be described with reference to Fig. 6. In the memory bank 13 are stored instructions that are common for the processing units, and in the memory bank 14 are stored individual instructions and data. It is allowable to separate the memory bank for instructions from the memory bank for data. In this case, the memory bank for data is separately provided, and individual instructions only are stored in the memory bank 14. The write control signal 102B consists of a write permit signal and a write signal. The write permit signal is formed by the logical product of all slave processing units when the instruction queues 15 of all slave processing units 2 are not filled enabling the instructions to be written thereon, and is input as a read permit signal to the processing device 12 via read control signal 105C and read control signal 104C. While the read permit signal is being produced, the processing device 12 sends to the address signal 104B an address where a common instruction is stored, sends a read signal to the read control signal 104C, and sends the read signal to the memory bank 13 via the read control signal 105C. A common instruction is sent from the memory bank 13 to the data signal 105A in synchronism with the read signal, and is sent to the processing unit 12 via the data signal 104A, and is further sent to the slave processing unit 2 via the data signal 102A. In addition to the instruction, the slave processing unit is served, as a write signal, with a read signal which the processing device 12 has sent to the read control signal 104C via the write control signal 102B, and which is delayed through the delay circuit 61. Therefore, as far as the instruction queues 15 of the slave units 2 are not filled up, the master processing unit 1 receives a common instruction, and broadcasts the same instruction to the slave processing units 2.

Operation of the slave processing unit 2 will now be described in conjunction with Fig. 6. The read control signal 103B consists of a read permit signal and a read signal. The read permit signal is produced all the time when the instruction queue 15 contains the instruction, and is input as a read permit signal to the processing device 12 via the read control signal 104C. While the read permit signal is being input, the processing device 12 sends an address of common instruction to the address signal 104B like the processing device 12 in the master processing unit 1, and sends a read signal to the read control signal 104C. The read signal is produced to the instruction queue 15 via the read control signal 103B, and the instruction broadcasted by the master processing unit 1 is produced from the instruction queue 15 and is read by the processing device 12. Therefore, the slave processing unit 2 follows the execution of common instruction by the master processing unit 1 to receive the common instruction, and executes it.

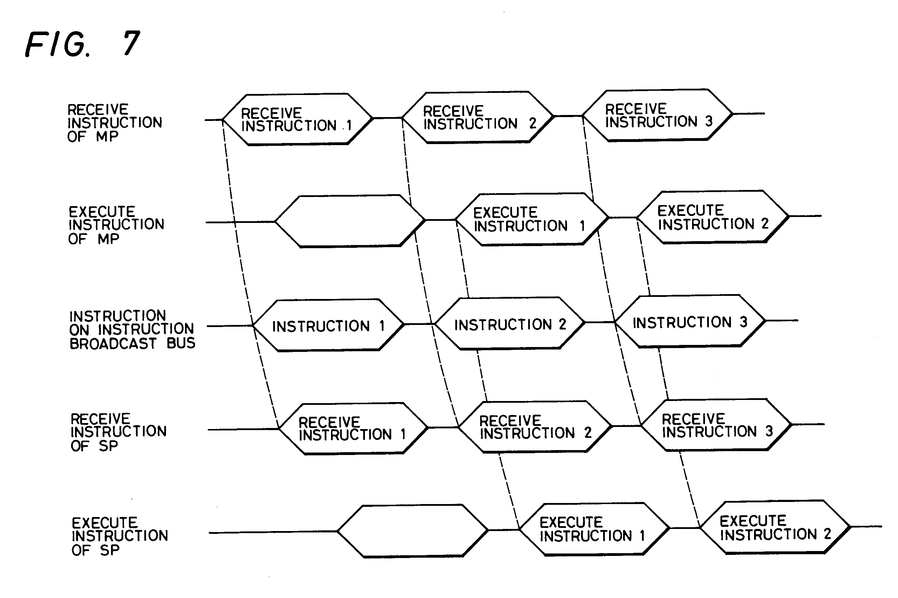

Fig. 7 is a time chart of when common instructions are received and executed by the master processing unit 1 and by the slave processing unit 2. In this embodiment, the processing device 12 is provided with a mechanism which receives instructions in advance. The master processing unit 1 successively receives instruction ①, instruction ②, and instruction ③ that are common to the master processing unit and to the slave processing units, and broadcasts them to the instruction broadcast bus 102 just as it receives such instructions. The slave unit receives the instruction after it has entered into the instruction queue. Therefore, the slave processing unit 2 receives and executes the common instruction at times that are lagged behind those of the master processing unit 1. However, the time of delay is not accumulated with the execution of instruction. The delay time consists of a time for propagating the signal over the instruction broadcast bus 102 and an access time of the instruction queue 15. There is very little difference in the time required for receiving the instruction compared with the conventional MIMD-type parallel processing computer in which are instructions are stored in the processing units.

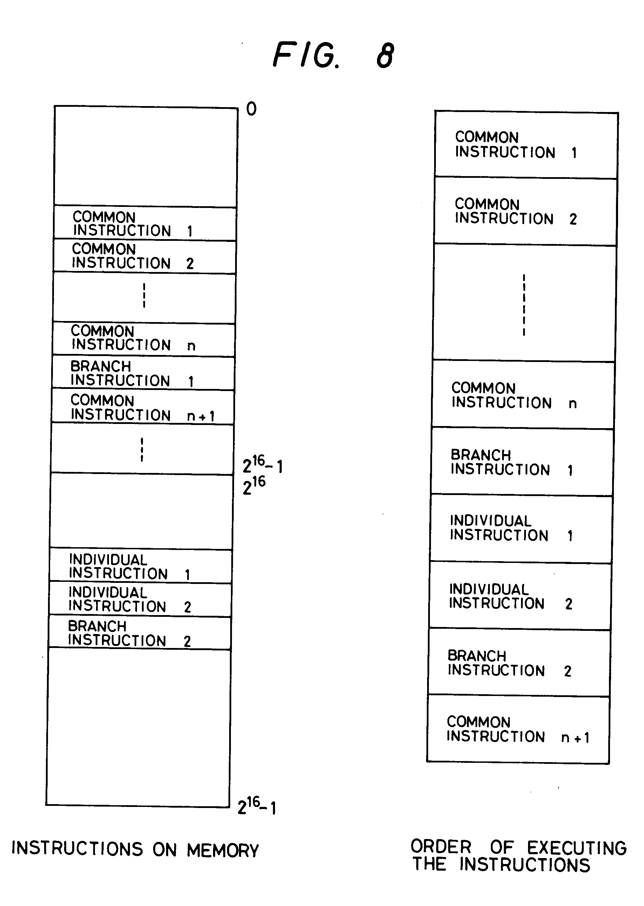

Fig. 8 shows a program for alternatingly executing the common instruction train and the individual instruction train. Into the memory bank 13 of the master processing unit 1 are assigned addresses 0 to $2^{16}-1$, and are stored common instructions as well as branch instructions. Into the memory banks 14 of the master processing unit 1 and the slave processing units 2 are assigned addresses $2^{10}$ to $2^{17}-1$, and are stored individual instructions and branch instructions. In this example, the branch instructions are to change the value of program counter of the processing device 12 so as to specify a different memory bank, wherein the branch instruction ① changes the program counter of the processing device 12 so as to specify the individual instruction ①, and the branch instruction ② changes the program counter so as to specify the common instruction

(n+1).

The slave processing unit 2 reads the common instruction and the branch instruction ① from the instruction queue 15 to execute the common instruction following the main processing unit 1.

Described below is a method of separating the common instruction from the individual instruction. Nowadays, structured programs are a mainstream of computer programs. A structured program consists of three fundamental forms ((a) linkage for indicating the order of processings, (b) repetition in which the processing is repeated while given conditions are being established, and (c) selection for selecting either one of the two processings depending upon given conditions). The structured program clarifies the logical structure of the program, making it easy to separate the common instructions from the individual instructions. When the fluid is to be numerically analyzed by the parallel processing computer of the embodiment, the processing unit shares part of the region that is to be analyzed. When there are a plurality of lattice points to share the partial regions, the same operation is carried out for each lattice point. Therefore, this portion is described by the repetition (b). If the lattice points of the partial regions are shared in an equal number by the processing units, the number of repetition is equal among the processing units, and this portion is treated as a common instruction. Setting of the boundary values differs depending upon whether the lattice points are included in the boundary or not, and is hence described by the selection (c). This differs depending upon each processing unit, and is treated as an individual instruction.

An example of paralle calculation will now be described. Described below is the case where a portion of which the pressure is to be repetitively found is parallel processed in the two-dimensional viscous flow analysis of Fig. 2. Here, the region to be analyzed is an elongated region having 16 x 8 grid points, the periphery thereof being a boundary. A neumann condition in which a differential coefficient in the direction of normal becomes zero, is given as a boundary condition of pressure, and the Jacobi method is employed as a method of repetition. The processing units of a number of 4 x 4, i.e., 16 are employed that are arranged in a one-dimensional manner, and each processing unit bears 4 x 2 lattice points.

In a single processing unit, an arrangement $p_{i,j}$ ($i = 0, 1, 2, 3, 4, 5$; $j = 0, 1, 2, 3$) is obtained as a data area of pressure P. When $i = 0, 5$ or $i = 0, 3$, a boundary value is stored by the processing unit or a value calculated by the neighboring processing unit is stored.

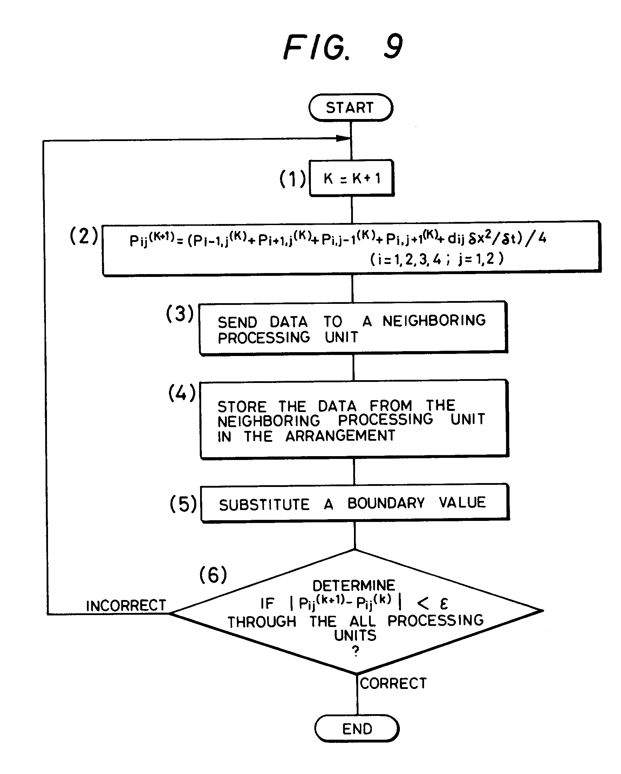

Fig. 9 illustrates the flow of processing.

(1) Renew K.

(2) Calculate pressure value $R_{ij}^{(k+1)}$ of the next step at each of the grid points.

(3) If there is a neighboring processing unit, send a pressure value of a grid point contacting to the neighboring processing unit.

(4) If there is a neighboring processing unit, store the pressure value sent from the neighboring processing unit in the arrangement.

(5) If contacted to the boundary, substitute the boundary value for the boundary element.

(6) Determine if the grid points in the processing unit are converged, and determined if they are converged through the all processing units.

Here, the steps (1) and (2) are treated as a common instruction. The steps (3), (4) and (5) are treated as individual instructions since the processings are different depending upon the processing units. The step (6) is also treated as an individual instruction, since whether the grid points are converged or not differs depending upon the processing units. Even for other portions of Fig. 2, the common instructions can be separated from the individual instructions. In the parallel processing computer of the present invention, therefore, the program is divided into common instructions and individual instructions in each of the processing units, common instructions are stored in a single master processing unit 1 and are sent to the slave processing units to meet the execution of instructions. Thereofre, the common instructions need not be stored in the slave processing units 2, and the numerical analysis of fluid can be parallel processed with a reduced memory capacity.

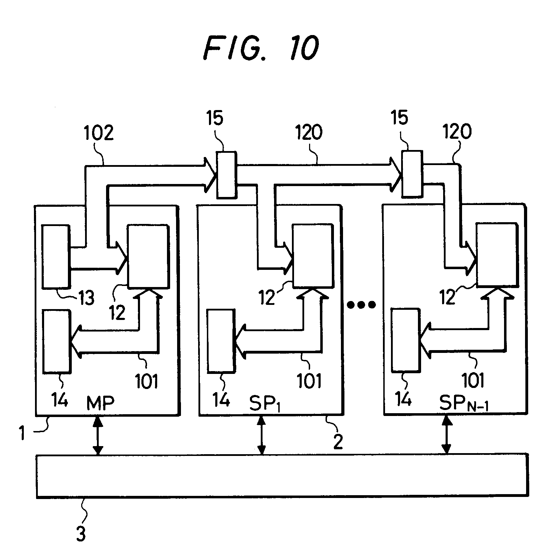

In the parallel processing computer, the number of processing units must be increased or decreased depending upon the scale of a problem that is to be solved. In the embodiment of Fig. 1, therefore, the master processing unit 1 must produce outputs to the instruction broadcast bus 102 maintaining a level that is increased to meet the upper level in the number of slave processing units 2, so that the common instructions can be written onto the instruction queues 15 of the plurality of slave processing units 2. If FIFO having a short access time is used as the instruction queue 15, the structure of Fig. 10 can be accomplished in which the master processing unit 1 needs produce outputs at a reduced level to the instruction broadcast bus 102, and the number of the processing units can be arbitrarily changed.

In Fig. 10, reference numeral 1 denotes a master processing unit, 2 denotes slave processing units, 3 denotes a data transfer network, 12 denotes processing devices, 13 denotes a memory bank, 14 denotes memory banks, 15 denotes instruction queues, 102 denotes an instruction broadcast bus, and 120 denotes a data signal which couples the instruction queues 15. The processing device 12 of the master processing unit 1 broadcasts a common instruction to the instruction broadcast bus 102 at the time when it receives the common instruction from the memory bank 13. The processing device 12 of the slave processing unit 2 receives an instruction from the instruction queue 15 and, at the same time, writes it onto the neighboring instruction queue 15. What makes this embodiment different from the embodiment of Fig. 1 is that in the embodiment of Fig. 1, the common instruction is broadcasted to all of the slave processing units simultaneously. In the embodiment of Fig. 10, however, the instruction is received by the slave processing units 2 being lagged by the access times of the instruction queues 15 as they become remote from the master processing unit. By employing FIFO having a short access time as the instruction queues 15, however, delay of time for the slave processing units 2 to receive instruction can be neglected irrespective of how remote they are from the master processing unit 1. Therefore, performance similar to those of the embodiment of Fig. 1 can be obtained. Namely, the master processing unit 1 needs produce small output to the instruction broadcast bus 102, and the number of the processing units can be arbitrarily changed.

[Effects of the Invention]

According to the MIMD-type parallel processing computer of the present invention, instructions common to the processing units are stored in a single processing unit and are commonly used for other processing units, making it possible to reduce the total memory capacity.

**Claims**

1. A MIMD parallel processing computer comprising:
a master processing unit (1),
a plurality of slave processing units (2),
a data transfer network (3) by which data between master (1) and slave (2) processing units are transmitted,
characterised in that
the master processing unit includes
an operation unit (12), which receives instructions from a memory (13, 14),
a memory bank (13) having common instructions, which are performed by all processing units in the same way,
a memory bank (14) having individual instructions, which are performed by the processing unit independently from the other processing units, and
each slave processing unit includes
an operation unit (12) which receives instructions from a local memory bank (14) and from an instruction queue (15),
said instruction queue (15), which is a FIFO type memory, and is connected to said memory bank having common instructions and which enables this memory bank to be a part of the slave processor's address space,
said local memory bank (14) having individual instructions, which are performed by the slave processing unit independently from the other processing units.

2. A parallel processing computer according to claim 1, characterised in that
the master processing unit (1) and the slave processing units (2) share part of the processing,
an instruction is broadcasted to the slave processing units (2) while said instruction is being received by the operation unit (12) of the master processing unit (1) from the memory bank (13) for common instructions, and
the operation units (12) in the slave processing units (2) receive the broadcasted instruction from the instruction queues (15).

**Patentansprüche**

1. Ein MIMD parallelverarbeitender Rechner, der umfaßt:
eine Master-Prozessoreinheit (1),
eine Vielzahl von Slave-Prozessoreinheiten (2),
ein Datenübertragungsnetzwerk (3), über welches Daten zwischen Master-(1) und Slave-(2)-Prozessoreinheiten übertragen werden,
**dadurch gekennzeichnet,** daß
die Master-Prozessoreinheit umfaßt
eine Recheneinheit (12), welche Befehle von einem Speicher (13, 14) empfängt,
eine Speicherbank (13) mit allgemeinen Befehlen, welche von allen Prozessoreinheiten in gleicher Weise abgearbeitet werden,
eine Speicherbank (14) mit individuellen Befehlen, welche von der Prozessoreinheit unabhängig von den anderen Prozessoreinheiten abgearbeitet wird, und
jede Slave-Prozessoreinheit umfaßt
eine Recheneinheit (12), welche Befehle von einer lokalen Speicherbank (14) und von einer Befehlsschleife (15) erhält,
besagte Befehlsschleife (15), die einen FIFO-Speicher darstellt und verbunden ist mit der besagten Speicherbank mit allgemeinen Befehlen und welche ermöglicht, daß diese Speicherbank ein Teil des Adressenraumes des Slave-Prozessors ist,
die besagte lokale Speicherbank (14) mit individuellen Befehlen, welche von der Slave-Prozessoreinheit unabhängig von den anderen Prozessorenheiten abgearbeitet wird.

2. Ein parallelverarbeitender Rechner nach Anspruch 1, dadurch gekennzeichnet, daß
die Master-Prozessoreinheit (1) und die Slave-Prozessoreinheiten (2) sich einen Teil der Verarbeitung teilen,
ein Befehl an die Slave-Prozessoreinheiten (2) übertragen wird, während der besagte Befehl empfangen wird durch die Recheneinheit (12) der Master-Prozessoreinheit (1) von der Speicherbank (13) für allgemeine Befehle, und die Recheneinheiten (12) in den Slave-Prozessoreinheiten (2) den übertragenen Befehl von der Befehlsschleife (15) empfangen.

nes, et

les unités d'exploitation (12) contenues dans les unités de traitement esclaves (2) reçoivent l'instruction diffusée de la part des files d'attente d'instructions (15).

**Revendications**

1. Ordinateur à traitement en parallèle du type MIMD, ou à instructions multiples et données multiples, comprenant :

une unité de traitement maîtresse (1),

plusieurs unités de traitement esclaves (2),

un réseau de transfert de données (3) par lequel des données sont transmises entre les unités de traitement maîtresse (1) et esclaves (2), caractérisé en ce que

l'unité de traitement maîtresse comporte

une unité d'exploitation (12), qui reçoit des instructions de la part d'une mémoire (13, 14),

un groupement de mémorisation (13) possédant des instructions communes, qui sont exécutées par toutes les unités de traitement de la même manière,

un groupement de mémorisation (14) possédant des instructions particulières, qui sont exécutées par l'unité de traitement indépendamment des autres unités de traitement, et

chaque unité de traitement esclave comporte

une unité d'exploitation (12) qui reçoit des instructions de la part d'un groupement de mémorisation local (14) et de la part d'une file d'attente d'instructions (15),

ladite file d'attente d'instructions (15), qui est une mémoire du type FIFO, ou "premier entré, premier sortie", et est connectée audit groupement de mémorisation possédant des instructions communes et qui autorise ce groupement de mémorisation à faire partie de l'espace d'adressage de l'unité de traitement esclave,

ledit groupement de mémorisation local (14) possédant des instructions particulières, qui sont effectuées par l'unité de traitement esclave indépendamment des autres unités de traitement.

2. Ordinateur à traitement en parallèle selon la revendication 1, caractérisé en ce que

l'unité de traitement maîtresse (1) et les unités de traitement esclaves (2) se partagent le traitement,

une instruction est diffusée aux unités de traitement esclaves (2) pendant que ladite instruction est en train d'être reçue par l'unité d'exploitation (12) de l'unité de traitement maîtresse (1) en provenance du groupement de mémorisation (13) pour instructions commu-

# *FIG. 1*

# FIG. 2

START

(1) SET INITIAL VALUES u, v.

(2) REPETITIVE CALCULATION FINISHED ? — YES → END

NO

(3) CALCULATE INTERMEDIATE VALUES OF u AND v.
$$\bar{u} = u^{(v)} + \delta t \{ -(u^{(v)} \cdot y) u^{(v)} + \nu y^2 u^{(v)} \}$$

(4) CALCULATE MASS RESIDUAL
$$d = y \cdot \bar{u}$$

(5) REPETITIVELY FIND A SOLUTION OF PRESSURE EQUATION
$$y^2 \cdot P = d / \delta t$$

(6) CORRECT THE FLOW VELOCITY
$$u^{(v+1)} = \bar{u} - \delta t \, y \, P$$

(7) $\nu = \nu + 1$

## FIG. 3

# FIG. 4

# FIG. 5

|  | 0 |
|---|---|
| MEMORY BANK 13 EQUIPPED WITH A MEMORY FOR COMMON INSTRUCTIONS | $2^{16}-1$ |
| MEMORY BANK 14 EQUIPPED WITH A MEMORY FOR INDIVIDUAL INSTRUCTIONS AND DATA | $2^{16}$ $2^{17}-1$ |

ADDRESS MAP OF MP

|  | 0 |
|---|---|
| INSTRUCTION QUEUE 15 EQUIPPED WITH FIFO | $2^{16}-1$ |
| MEMORY BANK 14 EQUIPPED WITH A MEMORY FOR INDIVIDUAL INSTRUCTIONS AND DATA | $2^{16}$ $2^{17}-1$ |

ADDRESS MAP OF SP

# FIG. 6

FIG. 7

# FIG. 8

INSTRUCTIONS ON MEMORY

ORDER OF EXECUTING
THE INSTRUCTIONS

# FIG. 9

START

$(1)$ $K = K + 1$

$(2)$ $P_{ij}^{(K+1)} = (P_{i-1,j}^{(K)} + P_{i+1,j}^{(K)} + P_{i,j-1}^{(K)} + P_{i,j+1}^{(K)} + d_{ij}\,\delta x^2/\delta t)/4$
$(i = 1, 2, 3, 4 \; ; \; j = 1, 2)$

$(3)$ SEND DATA TO A NEIGHBORING PROCESSING UNIT

$(4)$ STORE THE DATA FROM THE NEIGHBORING PROCESSING UNIT IN THE ARRANGEMENT

$(5)$ SUBSTITUTE A BOUNDARY VALUE

$(6)$ DETERMINE IF $| P_{ij}^{(k+1)} - P_{ij}^{(k)} | < \varepsilon$ THROUGH THE ALL PROCESSING UNITS ?

INCORRECT

CORRECT

END

# FIG. 10